# EUROPEAN PATENT APPLICATION

(11) **EP 4 474 421 A1**
(43) Date of publication of application: **11.12.2024**
(21) Application number: 23178026.3
(22) Date of filing: 07.06.2023
(51) Int. Cl.: C08L 23/06, C08J 5/18

(54) **PROCESS OF PROVIDING A COMPOSITION COMPRISING RECYCLED POLYETHYLENE**

(71) Applicant: Nexam Chemical AB, 234 35 Lomma (SE)
(72) Inventor: Pisciotti, Francesco, 247 63 Veberöd (SE); Selling, Hugo, 212 11 Malmö (SE); Keivanshokouh, Amin, 226 46 Lund (SE); Solano Arribas, Carlos, 223 53 Lund (SE)
(74) Representative: Ström & Gulliksson AB

(57) **Abstract**

Use of a polymer (B) comprising an ethylene backbone and pendant hydrolysable silicon-containing groups as an MFR₂ modifier and/or a compatibilizer modifier for a composition (P) comprising recycled polyethylene.

## Description

### Technical field

The present invention relates to a process for recycling post-consumer and/or post-industrial polyethylene to allow for re-use thereof. Further, the present invention relates to a recycled post-consumer and/or post-industrial polyethylene composition having improved melt flow rate.

### Background of the invention

Recycling of waste products has become increasingly common practice in the last decades. The recycling of plastic materials is important and widely carried out by many industries and households around the world. A multitude of everyday consumer items is made from plastic materials, such as bottles, bags, products, and especially liquid food board-based packaging. Liquid food board-based packaging are typically based on liquid packaging board. It is important to recycle and reuse the polymers.

However, it is necessary to monitor and ensure the quality of the recycled plastics. An object of particular importance in recycling polyethylene is to meet processability requirements. Polyethylene is recycled from various processes. Recycled polyethylene has at least been used once. The recycled polyethylene originates from post-consumer and/or post-industrial uses. Most recycled plastics are mixed into a single stream of plastics, which is collected and processed by a material recovery facility. At the material recovery facility, materials are sorted, washed, granulated, and packaged for resale. Plastics can be sorted into individual materials, such as high-density polyethylene (HDPE) or poly(ethylene terephthalate) (PET), or mixed streams of other common plastics, such as polypropylene (PP), low-density polyethylene (LDPE), poly(vinyl chloride) (PVC), polystyrene (PS), polycarbonate (PC), and polyamides (PA). The single or mixed streams can then be further sorted, washed, and reprocessed into a pellet that is suitable for selected purposes. Though recycled plastics are sorted into predominately uniform streams and are washed with aqueous and/or caustic solutions, the final reprocessed streams typically still remain contaminated with other plastics and the properties of the stream may vary not only between different types of recycled polyethylene, but even between different batches of the same type of polyethylene. For example, there will nearly always be small amount of polypropylene in a recycled polyethylene stream.

One particular stream from post-consumer recycling is liquid food board-packages comprising liquid packaging board. This stream comprises liquid packaging board with and without aluminium layers or other oxygen barrier layers. These packages have an inner layer of plastic. The purpose of this layer is to preserve the liquid food, which can be milk, juice or any other liquid or semi-liquid food and to seal the package. This layer has food approval, and is typically an LDPE. Next to this layer, there can be barrier layers that prevent oxygen diffusion, adhesion layers to either paper board or aluminium or other oxygen barrier layers. The aluminium layer is used as an oxygen barrier. The paper board layer is typically outside the optional aluminium layer. Commonly there is an outer layer made of polyethylene, with an optional adhesion layer to the board. The liquid packaging board in liquid food board-packages are complex, and each layer has different purposes and properties. Most layers/construction comprise polyethylene. Most of the polyethylene is LDPE, but also linear low-density polyethylene (LLDPE) is used. In addition, adhesion layers can be made of ethylene methacrylic acid copolymer (EMAA), ethylene acrylic acid copolymer (EAA) or maleic anhydride grafted polyolefins (MAH). The adhesion layers typically comprise polar polymers. The adhesion layers can be treated by ozone treatment to increase polarity and thus increase adhesion to aluminium layer. The stream further comprises HDPE that originates from caps, which commonly are grinded.

In order to separate the layers, the liquid packaging board may be subject to delamination. Delamination of liquid packaging board in the liquid food board-packages is commonly made in a paper mill and the paper fibres are removed with water and recycled.

In the case of a liquid packaging board without aluminium layer, the remaining mixture comprises a mixture of laminated polyethylene films and hard plastic components, used for caps and closures, which typically comprise mainly HDPE. The recycled polyethylene stream is typically in the form of flakes.

In the other case in which the liquid packaging board with an aluminium layer the remaining mixture comprises a mixture of strongly laminated foil of polyethylene and aluminium. It further comprises hard plastic components used for caps and closures, which typically comprise mainly HDPE.

The foil can be separated by several methods such as the one disclosed in US5421525. An improved variant thereof is disclosed in CN101891903B, which describes an acid-based delamination process. The delamination is done in an organic acid solution at elevated temperatures. Examples of organic acids are acetic or formic acids. The aluminium and polyethylene layers are separated. The recycled polyethylene stream is free from aluminium residues and is typically in the form of flakes.

Other processes for delamination are described in US2021086406A1, which comprise a mixture of water, carboxylic acid, carboxylate salt and passivation agent. EP3554834B1 describes a mixture of water carboxylic acid, phosphoric acid and alkali metal. Further methods are described in US10682788B2, which comprise water, a swelling agent, an anionic surfactant, a carboxylic acid, and at least one of a co-surfactant or a hydrotrope.

The properties of recycled streams vary. Thus, usefulness of the recycled polyethylene will vary. One solution to this is to test the properties of every lot and define possible use based on the outcome of the tests. This would however be difficult, costly, and impractical. To ensure stable properties of the recycled polyethylene stream resilient solutions must be found that ensure the recycled polyethylene meets the specification for a given application.

Thus, there is a need for a process for up-cycling of post-consumer and post-industrial polyethylene.

### Summary of the invention

The invention relates to a method for producing a composition (P) comprising recycled polyethylene. In particular, the invention relates to a method of providing a composition (P) comprising recycled polyethylene (A), wherein the composition (P) comprising the recycled polyethylene (A) has lower MFR (melt flow rate) than the recycled polyethylene used as starting material for the polyethylene composition (P).

As known in the art, when polyethylene is processed and recycled, the MFR is inherently affected. This will make the recycled polyethylene less useful because many applications require a defined, typically low, MFR.

In industrial production of virgin polyethylene, the MFR is controlled by the production parameters. Therefore, there is no need to change the MFR of virgin polyethylene, as different types and qualities of virgin polyethylene are available. However, as the MFR is inherently affected in recycling, it would be desirable to provide means for controlling it in recycling of polyethylene in order to facilitate re-use of the recycled polyethylene in various applications. Further, means for controlling the MFR of recycled polyethylene implies that mixing of different batches of recycled polyethylene is facilitated. Further, any variation in MFR between various batches of recycled polyethylene from a given source or supplier may be compensated for.

An object of this invention is to provide for lowering the MFR of a composition (P) comprising recycled polyethylene.

The polyethylene products to be recycled are often reprocessed into a pellet that is suitable for selected purposes. Process streams from single or mixed sources of polyethylene products may be used for granulation. Granulated means that the plastic is compounded and pelletized, typically by extrusion. This may affect the MFR of the plastic, commonly referred to degradation of the plastic, even though recombination of degradation fragments at least partly will compensate for the degradation.

However, it has surprisingly been found that by introducing a polymer (B) comprising an ethylene backbone and pendant hydrolysable silicon-containing groups, the MFR may be lowered during compounding, whereby compensating for the effects of degradation. An example of a suitable polymer (B) with pendant hydrolysable silicon-containing groups is for example disclosed in EP2582743 A1. Suitable polymers comprising an ethylene backbone and pendant hydrolysable silicon-containing groups are commercially available from Borealis under the trademark Visico.

The compounding is suitably done in a compounding machine wherein the polymers are mixed. Compounding is done in suitable extruders with efficient mixing. A suitable level of mixing is required to get a homogenous polymer melt and even polymer properties. The compounding should provide for melt mixing of the polymers in order to initiate a reaction between them, whereby affecting the MFR.

The composition (P) of this invention comprising recycled polyethylene is for example intended for various applications; for example film blowing, pipe extrusion, blow moulding, injection moulding, and/or extrusion foaming applications. At least some of these applications require low MFR of the composition (P) comprising recycled polyethylene. Further, these applications benefit from the flexibility that comes from MFR adjustments.

In one embodiment, the composition (P) comprising recycled polyethylene is blown into a film. This process requires that the MFR₂ of the recycled polyethylene is low, such as equal to or lower than 5 g/10 min, and controlled. The melt strength of the recycled polyethylene depends, among other things, on the MFR and the homogeneity of the composition (P) comprising recycled polyethylene. Strain hardening is very beneficial in film blowing. If the composition (P) comprising recycled polyethylene composition is not homogenous, the film bubble will break or be unstable. To produce blown film bubble homogeneity is important. This is challenging for heterogenous materials obtained from recycling, especially post-consumer recycle (PCR), typically comprising not only various types of polyethylene, but often also minor amounts of other polymers. Surprisingly, compounding with a polymer (B) with pendant hydrolysable silicon-containing groups does not only affect the MFR, but it does also act as a compatibilizer modifier, i.e. it increased the homogeneity of heterogeneous materials obtained from recycling of polyethylene.

When polyethylene is recycled, chain scission may occur. The short chains formed by chain scission may increase the MFR of the recycled polyethylene. This will affect the melt strength of the recycled polyethylene. However, even though the short chains may recombine in various ways to at least partly compensate for the initial chain scission, is still beneficial to adjust the MFR to compensate for the effects of degradation by using an ethylene copolymer (B) comprising hydrolysable silicon-containing groups.

The required MFR₂ for applications such as film blowing is typically below 5 g/10 min may be provided by compounding recycled polyethylene with polymer (B) with pendant hydrolysable silicon-containing groups.

Further, by compounding recycled polyethylene with polymer (B) with pendant hydrolysable silicon-containing groups, it can be used for other applications such as pipe extrusion, blow moulding, injection moulding and extrusion foaming applications. The MFR is important for processability and mechanical strength of the final product.

In pipe applications, melt strength is important for dimensional stability of the pipe. When pipes are extruded, there is molten polymer inside the pipe walls. If the melt strength is low, the molten polymer will flow inside the pipe walls and the pipe will be thicker in the bottom part. To meet the mechanical properties of the pipe a low MFR is required.

Hence, according to an aspect of the invention there is provided a process of providing a composition (P) comprising recycled polyethylene (A) and a polymer (B) comprising an ethylene backbone and pendant hydrolysable silicon-containing groups. The composition (P) comprises:
a) at least 50 wt.% of recycled polyethylene (A), and
b) 0.5 to 15 wt.% of a polymer (B) comprising an ethylene backbone and pendant hydrolysable silicon-containing groups.

The process of providing the a composition (P) comprising recycled polyethylene from recycled polyethylene (A) and a copolymer (B) comprises the step of compounding a recycled polyethylene (A) with a polymer (B) comprising an ethylene backbone and pendant hydrolysable silicon-containing groups to provide the composition (P) comprising recycled polyethylene. The composition (P) comprising the recycled polyethylene (A) has at least 15% lower MFR₂ compared to the recycled polyethylene (A) before being compounded with the polymer (B) with pendant hydrolysable silicon-containing groups.

It is an object of the invention to control and/or lower the MFR of the composition (P) comprising recycled polyethylene. The recycled polyethylene (A) can be obtained from various processes of recycling. An example of recycled polyethylene (A) is polyethylene that can be obtained from post-consumer recycling or post-industrial recycling. The physical properties of recycled polyethylene depend on the source. It is thus an object of the invention to provide an efficient, simple, and reliable control of the MFR of recycled polyethylene. The object can be achieved by adding a sufficient amount of a polymer (B) comprising an ethylene backbone and pendant hydrolysable silicon-containing groups. The composition (P) comprising recycled polyethylene comprises at least 0.5 wt.%, such as 0.5 to 15 wt.%, of the polymer (B) with pendant hydrolysable silicon-containing groups.

Compounding polyethylene compositions is a well stablished technology. Thus, one advantage of the invention is that it can be implemented on present extrusion equipment. It is envisaged that the implementation can be achieved at various stages of recycling of the polyethylene.

According to an embodiment, the compounding is made to provide a polyethylene composition (P) comprising the polymer (B) with pendant hydrolysable silicon-containing groups for subsequent use in producing various articles. This may be at a recycling facility producing compositions comprising recycled polyethylene. Typically, such compositions are provided as pellets, granules, or flakes. The polyethylene composition (P) comprising the polymer (B) with pendant hydrolysable silicon-containing groups may subsequently be used by a manufacture of plastic articles, like PE-film, and in sheet extrusion. In such use, the polyethylene composition (P) comprising the polymer (B) with pendant hydrolysable silicon-containing groups - typically in the form of pellets, granules, or flakes - are added to an extruder.

According to another embodiment, the compounding is made *in situ* in producing various articles. The producer of a plastic article may add a polymer (B) comprising an ethylene backbone and pendant hydrolysable silicon-containing groups to the recycled polyethylene (A) in producing the article. Typically, they are both added to an extruder to be melt mixed therein before forming the melt into an article, such as a PE-film. According to such an embodiment, the method may comprise a subsequent step of forming the composition (P) comprising the recycled polyethylene into an article. Examples of articles comprise films, containers, bottles, pipes, profiles, and trays.

In order to not impair the effect of the polymer (B) with pendant hydrolysable silicon-containing groups, the moisture content in the recycled polyethylene (A) to be compounded with polymer (B) is less than 5 wt.%. As the moisture content in recycled polyethylene (A) may be quite high, it may be necessary to take measures to control the moisture content, such as by heating and/or by applying sub-atmospheric pressure. According to an embodiment, the moisture content in the recycled polyethylene (A) to be compounded with polymer (B) is less than 3.0 wt.%. The best effect is achieved if the moisture content in the recycled polyethylene (A) to be compounded with polymer (B) is less than 1.0 wt.%

Further, recycled polyethylene (A) typically comprises various contaminants, such as other polymers, i.e. the recycled polyethylene (A) is part of a composition. The compounding with a polymer (B) with pendant hydrolysable silicon-containing groups will decrease any tendency of forming a heterogenic composition impairing the properties of articles, like PE-films, produced from the composition (P) comprising recycled polyethylene. Still, it is preferred if only minor amounts of other polymers are present in the composition (P) comprising recycled polyethylene.

According to an embodiment, the recycled polyethylene (A) is provided as a composition (AA) comprising not only polyethylene but also other polymer(s). The composition (AA) may comprise less than 5.0 wt.% polyethylene terephthalate (PET), such as less than 2.0 wt.% or less than 1.0 wt.% PET. Further, or alternatively, the composition (AA) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin. Further, also the composition (P) comprising recycled polyethylene may comprise other polymers than recycled polyethylene (A) and the polymer (B) with pendant hydrolysable silicon-containing groups. Typically, any content of other polymers in the composition (P) comprising recycled polyethylene originates from the recycled polyethylene (A). However, in some embodiments, it may be that other polymers are added to the composition (P) comprising recycled polyethylene. The content of other polymers present in the composition (P) comprising recycled polyethylene is typically controlled, by controlling the amount of other polymers in the composition comprising recycled polyethylene (A), such as by various measures in providing the recycled polyethylene, e.g. separating other polymers than polyethylene and/or by mixing various batches of recycled polyethylene comprising different amounts of other polymers.

Another aspect of the invention relates to a composition (P) comprising recycled polyethylene (A). The composition (P) comprising recycled polyethylene comprises:
a) at least 50 wt.% of recycled polyethylene (A), and
b) 0.5 to 15 wt.% of a polymer (B) comprising an ethylene backbone and pendant hydrolysable silicon-containing groups.

The composition (P) is obtainable by compounding the recycled polyethylene (A) with the polymer (B) with pendant hydrolysable silicon-containing groups. After the compounding, the composition (P) has a MFR₂ of 0.4 to 4 gram/10 min.

According to an embodiment, the recycled polyethylene (A) is provided as a composition comprising less than 5.0 wt.% polyethylene terephthalate (PET), such as less than 2.0 wt.% or less than 1.0 wt.% PET. Further, or alternatively, such a composition comprising recycled polyethylene (A) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin. Further, also the composition (P) comprising recycled polyethylene may comprise other polymers than recycled polyethylene (A) and the polymer (B) with pendant hydrolysable silicon-containing groups. According to an embodiment, the composition (P) comprising the recycled polyethylene comprises:
less than 5.0 wt.% polyethylene terephthalate (PET); and/or
less than 5.0 wt.% ethylene methacrylic acid copolymer (EMAA); and/or
less than 5.0 wt.% ethylene acrylic acid copolymer (EAA);
and/or less than 5.0 wt.% maleic anhydride (MAH) grafted polyolefin.

Furthermore, an embodiment relates to a film comprising recycled polyethylene. The film is provided by forming the composition (P) comprising recycled polyethylene into a film.

Similarly, another embodiment relates to an article comprising recycled polyethylene. The article is provided by forming the composition (P) comprising recycled polyethylene into an article. Examples of articles comprise films, containers, bottles, pipes, profiles, and trays. A film is an exemplary article.

Another aspect of the invention relates to the use of a polymer (B) comprising an ethylene backbone and pendant hydrolysable silicon-containing groups as an MFR modifier for recycled polyethylene. In such use, the recycled polyethylene (A) is compounded with the polymer (B) comprising an ethylene backbone and pendant hydrolysable silicon-containing groups to provide a composition (P) comprising recycled polyethylene. The moisture content in the recycled polyethylene (A) to be compounded with polymer (B) is less than 5 wt.%, such as less than 3.0 wt.% or less than 1.0 wt%. In embodiments relating to such use, a composition (P) comprising recycled polyethylene may comprise:
a) at least 50 wt.% of the recycled polyethylene (A), and
b) 0.5 to 15 wt.% of the polymer (B) with pendant hydrolysable silicon-containing groups.

The recycled polyethylene (A) may be provided as a composition (AA) comprising not only polyethylene but also other polymer(s). According to an embodiment, the composition (AA) comprising the recycled polyethylene (A) may comprise less than 5.0 wt.% polyethylene terephthalate (PET), such as less than 2.0 wt.% or less than 1.0 wt.% PET. Further, or alternatively, the composition (AA) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin.

Furthermore, another aspect of the invention relates to the use of a polymer (B) comprising an ethylene backbone and pendant hydrolysable silicon-containing groups as a compatibilizer modifier for recycled polyethylene (A). In such use, the recycled polyethylene (A) is compounded with the polymer (B) comprising an ethylene backbone and pendant hydrolysable silicon-containing groups to provide a composition (P) comprising recycled polyethylene. The moisture content in the recycled polyethylene (A) to be compounded with polymer (B) is less than 5 wt.%, such as less than 3.0 wt.% or less than 1.0 wt%. In embodiments relating to such use, the resulting composition (P) comprising the recycled polyethylene may comprise:
a) at least 50 wt.% of the recycled polyethylene (A), and
b) 0.5 to 15 wt.% of the polymer (B) with pendant hydrolysable silicon-containing groups.

Apart from polyethylene, like LDPE and/or HDPE, a composition (AA) comprising the recycled polyethylene (A) may comprise minor amounts of e.g. various polar polymers with a polyethylene backbone, e.g. from adhesion layer(s) of liquid packaging board, and/or other polymer fractions like polypropylene (PP) and/or polyethylene terephthalate (PET). The recycled polyethylene (A) may thus be provided as a composition (AA) comprising not only polyethylene but also other polymer(s). According to an embodiment, a composition (AA) comprising the recycled polyethylene (A) may comprise less than 5.0 wt.% polyethylene terephthalate (PET), such as less than 2.0 wt.% or less than 1.0 wt.% PET. Further, or alternatively, the composition (AA) comprising the recycled polyethylene (A) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin.

The polymer (B) with pendant hydrolysable silicon-containing groups, has surprisingly been found to work as a compatibilizer to make a continuous matrix with melt strength. One effect of the addition of the polymer (B) with pendant hydrolysable silicon-containing groups is that the homogeneity increases. The resulting composition (P) comprising recycled polyethylene has one phase that binds all parts together including even HDPE. Another advantage is that the entire matrix takes the stress during film blowing.

### Detailed description

As used herein, the term "recycled polymer" refers to a polymer used for a previous purpose and then recovered for further processing.

As used herein, the term "post-consumer" refers to a source of material that originates after the end consumer has used the material in consumer goods or products.

As used herein, the term "post-consumer recycle" (PCR) refers to a material that is produced after the end consumer has used the material and has disposed the material in a waste stream.

As used herein, the term "post-industrial" refers to a source of a material that originates during the manufacture of goods or products.

As used herein, the term "recycled polyethylene" may refer to polyethylene obtained from post-consumer recycle polyethylene or post-industrial polyethylene intended to be used as raw material in the production of new products.

In order to replace virgin polyethylene, the composition (P) comprising recycled polyethylene needs to comprise a substantial amount of polyethylene, i.e. at least 50 wt.% of the recycled polyethylene (A). Typically, the content of polyethylene is higher than 50 wt.%. In one embodiment, the amount of recycled polyethylene (A) in the polyethylene composition (P) is at least 75 wt.%. Preferably, the amount of recycled polyethylene (A) in the polyethylene composition (P) is at least 80 wt.%, such as at least 90 wt.%.

The MFR of the recycled polyethylene (A) may vary. The recycled polyethylene (A) may have an MFR₂ of 1 to 15 g/10 min, such as 5 to 12 g/10 min. MFR₂ may be determined according to ISO 1133-2:2011 at a temperature of 90°C and a load of 2.16 kg.

Typically, the addition of a polymer (B) comprising an ethylene backbone and pendant hydrolysable silicon-containing groups will lower the MFR of the resulting composition (P) comprising recycled polyethylene. According to a preferred embodiment, the composition (P) comprising the recycled polyethylene (A) has at least 20%, such as at least 30%, lower MFR₂ compared to the recycled polyethylene (A) before being compounded with the polymer (B) with pendant hydrolysable silicon-containing groups.

The composition (P) comprising recycled polyethylene (A) shall add up to 100%. The composition (P) comprising recycled polyethylene (A) may, apart from the recycled polyethylene (A) and the polymer (B) with pendant hydrolysable silicon-containing groups, comprise additivities, pigments, and other polymer fractions. The method may thus comprise a step of adding additivities, pigments, and/or other polymer fractions to the composition (P) comprising recycled polyethylene (A). Further, the may be added to the recycled polyethylene (A) before adding the polymer (B) with pendant hydrolysable silicon-containing groups. Alternatively, they may be added to the polymer (B) with pendant hydrolysable silicon-containing groups before being mixed with the recycled polyethylene (A). As an example, the composition (P) comprising recycled polyethylene (A) can comprise pigment, such as carbon black. This will increase the density of the composition (P) comprising recycled polyethylene. Further, the polyethylene composition (P) comprising recycled polyethylene (A) may comprise antioxidants. In order to reducing degradation in processing the polyethylene composition (P) comprising recycled polyethylene (A), it may be beneficial to add antioxidants to the composition (P) comprising recycled polyethylene (A) or to the recycled polyethylene (A) before being mixed with the polymer (B) with pendant hydrolysable silicon-containing groups. Even though virgin polyethylene typically comprises antioxidants, it may still be beneficial to add further antioxidants. The original antioxidants are typically, at least partly, inactivated and/or degraded, in processing the virgin polyethylene and in re-recyling polyethylene. Additives, pigments, and antioxidants are suitably added by use of masterbatches. If further polymer fractions are added into the composition (P) comprising recycled polyethylene suitable virgin polyethylene is added. Virgin polyethylene be may added to dilute any contaminants in the recycled polyethylene (A). However, given the effect the polymer (B) with pendant hydrolysable silicon-containing groups, acting as compatibilizer modifier, the need to add a further polymer fraction, like virgin polyethylene, may typically be dispensed with.

According to an embodiment, the composition (P) comprising the recycled polyethylene comprises;
less than 5.0 wt.% polyethylene terephthalate (PET); and/or
less than 5.0 wt.% ethylene methacrylic acid copolymer (EMAA); and/or
less than 5.0 wt.% ethylene acrylic acid copolymer (EAA);
and/or less than 5.0 wt.% maleic anhydride (MAH) grafted polyolefin.

In one embodiment, the amount of the polymer (B) with pendant hydrolysable silicon-containing groups in the polyethylene composition (P) is from 1 to 10 wt.%, more suitably 2.0 to 7.0 wt.%, most suitably 2.0 to 5.0 wt.%.

The amount of copolymer (B) to be added is determined in relation to the desired MFR of the composition (P) comprising recycled polyethylene. The desired MFR of the polyethylene composition (P) is defined by the intended end use of the composition (P) comprising recycled polyethylene. According to an embodiment, the MFR₂ of the composition (P) comprising recycled polyethylene is 0.4 to 10 gram/10 min. For some application a lower MFR₂ is desired. The MFR₂ of the composition (P) comprising recycled polyethylene may thus be 0.4 to 4.0 gram/10 min, such as 1.0 to 3.0 gram/10 min.

The amount of hydrolysable silicon-containing groups in the polymer (B) comprising an ethylene backbone and pendant hydrolysable silicon-containing groups, is preferably quite low as this will improve the compounding process. The lower the amount of pendant hydrolysable silicon-containing groups are, the more similar the polymer (B) with pendant hydrolysable silicon-containing groups is to polyethylene. It will make it simpler, more stable and a more homogenous composition. However, the number of hydrolysable silicon-containing groups needs to be sufficient to provide the desired effect.. According to an embodiment, the polymer (B) comprising an ethylene backbone and pendant hydrolysable silicon-containing groups comprises 0.0001 to 0.015, such as 0.001 to 0.010, pendant hydrolysable silicon-containing groups per repeating ethylene unit.

In an embodiment, the ethylene polymer (B) with pendant hydrolysable silicon-containing groups is a low-density polyethylene (LDPE). It is to be noted that a polyethylene produced in a high pressure (HP) process is referred herein generally as LDPE and which term has a well known meaning in the polymer field. Although the term LDPE is an abbreviation for low density polyethylene, the term is understood not to limit the density range, but covers the LDPE-like HP polyethylenes with low, medium and higher densities. The term LDPE describes and distinguishes only the nature of HP polyethylene with typical features, such as different branching architecture, compared to the PE produced in the presence of an olefin polymerisation catalyst, such as HDPE and LLDPE. The LDPE can be either recycled or virgin. Virgin means that the polymer has not been used, i.e. it is not recycled. Due to the lack of recycled ethylene copolymer (B) comprising hydrolysable silicon-containing groups it is most suitable to use virgin sources. The LDPE may be made in a high-pressure process. Another reason to use virgin ethylene copolymer (B) comprising hydrolysable silicon-containing groups is that its reactivity decreases with use, i.e. recycled ethylene copolymers comprising hydrolysable silicon-containing groups are less reactive.

According to an embodiment, the polymer (B) with an ethylene backbone and pendant hydrolysable silicon-containing groups is a polymer obtainable by co-polymerisation of ethylene and a vinylsilane, such as vinyltrimethoxysilane and/or vinyltriethoxysilane. According to an embodiment, the content of the vinylsilane co-monomer in the co-polymerisation is 0.5 to 3 wt%, such as 1 to 2 wt.%. The polymerisation process is typically a high pressure (HP) process. The polymer (B) with an ethylene backbone may thus be denoted as a low-density polyethylene (LDPE). An example of such a polymer is Visico^{™} LE4423, a copolymer commercially available from Borealis. In such co-polymerisation, the amount of the vinylsilane may be 0.01 to 1.5 mol%, such as 0.1 to 1.0 mol%.

According to an embodiment, the pendant hydrolysable silicon-containing groups are groups comprising hydrolysable silyl groups, such as trimethoxysilyl groups, and/or triethoxysilyl groups, and/or triacetoxy silane, preferably trimethoxysilyl groups and/or triethoxysilyl groups.

Apart from pendant hydrolysable silicon-containing groups, the polymer (B) with an ethylene backbone and pendant hydrolysable silicon-containing groups may comprise other pendant groups, like acetate groups (from polymerization with vinyl acetate), esterified carboxyl groups (from alkyl acrylates, like methyl acrylate). The polymer (B) with an ethylene backbone and pendant hydrolysable silicon-containing groups may thus be e.g. a terpolymer. Such ter-polymers are known *inter alia* from WO 2016/041922.

The provided composition (P) comprising recycled polyethylene is preferably essentially free from peroxide and/or peroxide residues. Peroxide and/or peroxide residues can come from various steps in reactive compounding. As known in the art, polyethylene can be treated by reactive compounding with peroxide in order to decrease the MFR. The peroxide will crosslink the polyethylene chains and enlarge the molecules. However, the peroxide residues are smelly, and furthermore, the handling of peroxides is troublesome. Further, cross-linking could result in detrimental formation of a microgel. One object of the invention is hence to avoid peroxide and its residues. Given the unexpected properties of a polymer (B) comprising an ethylene backbone and pendant hydrolysable silicon-containing groups, when compounded with recycled polyethylene (A), the MFR of the recycled polyethylene (A) may be affected without having to use peroxides.

In a preferred embodiment of the invention, the entire process is free from peroxide or peroxide residues. Especially, the polymer (B) comprising an ethylene backbone and hydrolysable silicon-containing groups is essentially free from peroxide or peroxide residues. Thus, the copolymer (B) comprising an ethylene backbone and hydrolysable silicon-containing groups is a according to an embodiment a non-grafted co-polymer with a polyethylene backbone, suitably a LDPE that is made in a high-pressure process.

In an alternative embodiment, the polymer (B) with pendant hydrolysable silicon-containing groups is a polyethylene that is grafted. Polyethylene can be grafted with silane containing groups, such as ethylene-vinyl silane, which is well known in the art. As grafting of polyethylene typically requires use of peroxides, embodiments including use of polyethylene that is grafted with silane containing groups by use of peroxides are less preferred.

In a preferred embodiment of the invention, the composition (P) comprising recycled polyethylene is essentially free from a silane condensation catalyst, such as dibutyl tin dilaurate (DBTL) or dioctyl tin dilaurate (DOTL). DBTL and DOTL are both organic tin compounds. Organic tin compounds are recognized as potentially toxic. Other examples of silane condensation catalysts are sulphonic acids. The purpose of a silane condensation catalyst is to crosslink the hydrolysable silicon-containing groups by a condensation reaction. It is preferred to avoid silane condensation catalyst since they are either harmful for the environment or involve strong acids. It is an objection of the invention to provide a recycling process of a polyethylene composition (P) wherein no silane condensation catalyst has been added through the recycling process. Thus, the composition (P) comprising recycled polyethylene is according to an embodiment essentially free from silane condensation catalyst.

It is an object of the invention that articles made from a recycled polyethylene composition (P) are substantially free of odour and comparable to articles made from virgin polyethylene in relation to smell and mechanical properties.

The recycled polyethylene (A) suitably comprises LDPE, LLDPE and/or HDPE. Polyethylene, such as LDPE, LLDPE and/or HDPE, is the major component in the recycled polyethylene (A). The recycled polyethylene (A) may thus comprise at least 50 wt%, such as at least 60 wt%, at least 70 wt%, at least 80 wt%, or at least 90 wt% LDPE, LLDPE and/or HDPE.

According to an embodiment, the recycled polyethylene (A), to be compounded with polymer (B) with pendant hydrolysable silicon-containing groups, is provided as a composition (AA). The composition (AA) may comprise not only polyethylene but also other polymer(s). Typically, the composition (AA) comprises at least 50 wt%, such as at least 60 wt%, at least 70 wt%, at least 80 wt%, or at least 90 wt% polyethylene. According to such an embodiment, the moisture content in the composition (AA) may be less than 5 wt.%, such as less than 3.0 wt.% or less than 1.0 wt%. Further, the composition (AA) may comprise not only polyethylene, but also other polymer(s), such as EMAA, EAA, and/or MAH grafted polyolefin. Further, the composition (AA) comprising not only polyethylene, may comprise a low molecular weight organic acid, such as formic acid and/or acetic acid. Such low molecular weight organic acids may originate from a delamination process, e.g. in recycling polyethylene from a liquid packaging board comprising polyethylene. As already stated, the recycled polyethylene (A) may according to an embodiment comprise less than 5.0 wt.% polyethylene terephthalate (PET), such as less than 2.0 wt.% or less than 1.0 wt.% PET. Further, or alternatively, the recycled polyethylene (A) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin.

The recycled polyethylene (A) can be obtained from post-consumer recycling. The recycled polyethylene (A) can also be obtained from post-industrial recycling. In a suitable embodiment, the recycled polyethylene (A) is from post-consumer recycling. This is a more demanding process since the recycled polyethylene (A) typically is a mixture of various polyethylenes. Further, such recycled polyethylene (A) is often contaminated by other mixed streams of other common plastics. As it was found that the polymer (B), comprising an ethylene backbone and pendant hydrolysable silicon-containing groups, may act as compatibilizer modifier for recycled polyethylene (A), mixture of various of polyethylenes may be acceptable. Further, some contamination of other polymers than polyethylene may also be acceptable. As already stated, a composition (AA) comprising the recycled polyethylene (A) may according to an embodiment comprise less than 5.0 wt.% polyethylene terephthalate (PET), such as less than 2.0 wt.% or less than 1.0 wt.% PET. Further, or alternatively, a composition (AA) comprising the recycled polyethylene (A) may comprise less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin.

In a preferred embodiment, the recycled polyethylene (A) is obtained from post-consumer recycling of a liquid food board-based packages comprising liquid packaging board. The liquid food board-packages can be with or without aluminium layer. Most suitably, the liquid food board-packages are with aluminium layer. It should be noted that in principle all streams with recycled polyethylene (A) that originates from post-consumer recycling of polyethylene stream has a high degree (e.g. up to 50 wt.%) of recycled polymers distinct from polyethylene from other streams. Such streams, comprises at least 50 wt.% recycled polyethylene, typically at least 75 wt.% recycled polyethylene.

The properties of the recycled polyethylene (A) vary. The variation of density of recycled polyethylene (A) can be from 890 kg/m³ to 990 kg/m³.

The colour of the composition (P) comprising recycled polyethylene can be any. Typically, no pigment is added in providing the composition (P) comprising recycled polyethylene. Upon using the composition (P) comprising recycled polyethylene to manufacture articles, pigment(s) may be added. The ash content in the composition (P) comprising recycled polyethylene may be below 2 wt.%. Further, the composition (P) comprising recycled polyethylene is typically provided in the form of pellets or granules. The moisture content in the composition (P) comprising recycled polyethylene may be below 0.1 wt.%. Whereas the moisture content in the composition (P) comprising recycled polyethylene typically is lower than in the recycled polyethylene (A) to be comprised in the composition (P), most properties of the composition (P) comprising recycled polyethylene, like the density, are essentially the same as for the recycled polyethylene (A) before adding the polymer (B) with pendant hydrolysable silicon-containing groups.

Whereas the description herein above focus on a process of providing a composition (P) comprising recycled polyethylene, aspects of the process relating to the composition (P), are, as appreciated by the skilled person, equally applicable to the composition (P) *per se,* as well as to use of the composition. Similarly, aspects of the process relating to the recycled polyethylene (A), are, as appreciated by the skilled person, equally applicable to the recycled polyethylene (A) *per se.* Also similarly, aspects of the process relating to the polymer (B) with pendant hydrolysable silicon-containing groups, are, as appreciated by the skilled person, equally applicable to the polymer (B) with pendant hydrolysable silicon-containing groups *per se.*

### Experimental

### Drawings

**Fig. 1** depicts a photograph of a film from comparative example 4, RPM 40; and
**Fig. 2** depicts a photograph of a film from Inventive example 7, RPM 60

### Measurement methods

The melt flow rate (MFR) is determined as MFR₂ according to ISO 1133 and is indicated in g/10 min. The MFR is an indication of the flowability, and hence the processability, of the polymer. The higher the melt flow rate, the lower the viscosity of the polymer. The MFR₂ of polyethylene is measured at a temperature 190°C and a load of 2.16 kg. All examples of compositions with at least 50 wt.% of polyethylene are measured at 190°C. The melt flow rate is preferably determined according to ISO 1133-2:2011.

Complex viscosity was measured at 190°C using a TA Instrument ARES-G2 TA rheometer. The configuration is a 25mm plate/plate geometry with 1% strain. Frequency sweep was from 100 to 0.1 rad/sec.

Elongation viscosity was measured at 150°C using a TA Instrument ARES-G2 rheometer equipped with an extensional viscosity fixture (EVF). The extension rate (Hencky rate) was 0.5 1/s and the final Hencky strain was 3.4.

Optical microscopy was performed using a Dino-Lite Digital microscope at 20x magnification.

### Materials

EVS is LE-4423, an ethylene vinyl silane copolymer commercially available from Borealis. The EVS is a low-density ethylene vinyl silane copolymer comprising an ethylene backbone and pendant hydrolysable silicon-containing groups. The copolymer is made in a high-pressure reactor. The density of the polymer is 923 kg/m³ and it has an MFR₂ of 1.0 g/10min.

Recycled polyethylene 1 has a MFR₂ of 8.7 g/10min. The polymer is obtained by collecting various liquid food board-based packages, comprising liquid packaging board, mainly from packages with layers of board, polymer and aluminium. First, the board layer is separated, and then the aluminium layer is separated by an acid-based delamination method prior to regranulation. The liquid food board packages originate from PCR and comprise the following polymers regranulated: LDPE> LLDPE >ethylene-co-acrylic and/or -co-methacrylic acid>HDPE >PET> MAH-grafted polyolefins and pigments. The PCR further comprises contaminations that are decreased by melt filtration during the regranulation process.

Recycled polyethylene 2 has a MFR₂ of 4.2 g/10 min. The polymer is obtained by collecting various liquid food board-based packages mainly from packages, comprising liquid packaging board, with layers of board, polymer and aluminium. First, the board layer is separated, and then the aluminium layer is separated by an acid-based delamination method prior to regranulation. The liquid food board packages originate from PCR and comprise the following polymers regranulated: LDPE> LLDPE >ethylene-co-acrylic or - co-methacrylic acid>HDPE >PET> MAH-grafted polyolefins and pigments. The PCR further comprises contaminations decreased or removed by melt filtration during the regranulation process.

Recycled polyethylene 3 has a MFR₂ of 4.4 g/10min. The polymer is obtained by collecting various liquid food board-based packages, comprising liquid packaging board, mainly from packages with layers of board, polymer and aluminium. First, the board layer is separated, and then the aluminium layer is separated by an acid-based delamination method prior to regranulation. The liquid food board packages originate from PCR and comprise the following polymers regranulated: LDPE> LLDPE >ethylene-co-acrylic or - co-methacrylic acid>HDPE >PET> MAH-grafted polyolefins and pigments. The PCR further comprises contaminations decreased or removed by melt filtration during the regranulation process.

Recycled polyethylene 4 has a MFR₂ of 3.6 g/10min. The polymer is obtained by collecting various liquid food board-based packages, comprising liquid packaging board, mainly from packages with layers of board, polymer and aluminium. First, the board layer is separated, and then the aluminium layer is separated by an acid-based delamination method prior to regranulation. The liquid food board packages originate from PCR and comprise the following polymers regranulated: LDPE> LLDPE >ethylene-co-acrylic or - co-methacrylic acid>HDPE >PET> MAH-grafted polyolefins and pigments. The PCR further comprises contaminations decreased or removed by melt filtration during the regranulation process.

LDPE-22 is 1922NO and is commercially available from Sabic. The polymer is made in a tubular reactor and is virgin and additive free. The density of the polymer is 919 kg/m³ and it has an MFR₂ of 22 g/10min.

LDPE-7 is 19N430 and is commercially available from Ineos. The density of the polymer is 920 kg/m³ and it has an MFR₂ of 7.5 g/10min.

LDPE-1 is LDPE 320E and is commercially available from Dow. The density of the polymer is 925 kg/m³ and it has an MFR₂ of 1 g/10min.

### Examples

The compositions shown in Table 1 were compounded in a single screw extruder SSE (Axon BX-25) at 220 rpm equipped with a water bath at room temperature before strand pellettization. The temperature settings of the extruder were 170, 220, 220, 220, 220, 220°C.

**Table 1**

| | **Comp. example 1** | **Comp. example 2** | **Inventive example 1** | **Inventive example 2** | **Inventive example 3** |
|---|---|---|---|---|---|
| Recycled polyethylene 1 [wt.%] | 100 | | 97.5 | 95 | 90 |
| EVS [wt.%] | | 100 | 2.5 | 5 | 10 |
| MFR₂ [g/10 min] | 8.7 | 0.9 | 2.9 | 1.1 | 0.4 |
| Relative difference [+/-%] | 0% | *na* | -67% | -87% | -95% |

In comparative example 1 the MFR₂ change has been measured in polymer composition with only recycled polyethylene 1. In **Table 1** all examples have been preheated 5 minutes before the MFR₂ were measured.

In comparative example 2 only EVS is used. The MFR₂ remains similar. In inventive example 1-3 recycled polyethylene 1 is mixed with different amounts of EVS. The MFR₂ decreases with added amount of EVS.

The relative difference is calculated as the ratio of MFR₂ of the composition (P) comprising recycled polyethylene divided by MFR₂ of the recycled polyethylene (A) minus 100%.

The examples in **Table 2** and **3** were compounded in a single screw extruder SSE (Axon BX-25) at 220 rpm equipped with a water bath at room temperature before strand pellettization. The temperature settings of the extruder were 170, 220, 220, 220, 220, 220°C.

**Table 2**

| | **Comp. Ex. 3** | **Inv. Ex. 4** | **Inv. ex. 5** |
|---|---|---|---|
| Recycled polyethylene 2 [wt.%] | 100 | 97.5 | 95 |
| EVS [wt.%] | | 2.5 | 5 |
| MFR₂ [g/10 min] | 4.2 | 3.0 | 1.3 |
| Relative difference [+/-%] | 0% | -28% | -69% |

**Table 3**

| | **Comp. Ex. 4** | **Inv. Ex. 6** | **Inv. Ex. 7** | **Comp. Ex. 5** | **Comp. Ex. 6** |
|---|---|---|---|---|---|
| Recycled polyethylene 3 [wt.%] | 100 | 97.5 | 95 | 97.5 | 95 |
| LDPE-1 | | | | 2.5 | 5 |
| EVS [wt.%] | | 2.5 | 5 | | |
| MFR₂ [g/10 min] | 4.4 | 2.1 | 1.0 | 4.2 | 3.9 |
| Relative difference [+/- %] | 0% | -52% | -77% | -4% | -11% |

In **Table 2** and **3** all examples have been preheated 5 minutes before the MFR₂ were measured. The results are consistent with the results from **Table 1.** As can be seen in **Table 3** (cf. Comp. Ex. 5 and 6), addition of an LDPE with low MFR (MFR₂ of 1 g/10min) does not provide the same effect as addition of EVS, confirming that the effect of EVS not merely results from its low MFR.

The extruder and process conditions in **Table 4** are the same as in **Table 2** and **3.**

**Table 4**

| | **Comp. example 7** | **Inventive example 8** | **Inventive example 9** |
|---|---|---|---|
| Recycled polyethylene 4 [wt.%] | 100 | 97.5 | 95 |
| EVS [wt.%] | | 2.5 | 5 |
| MFR₂ [g/10 min] | 3.6 | 1.3 | 0.48 |
| Relative difference [+/- %] | 0% | -64% | -87% |

**Table 4** discloses further examples of the invention, confirming the previous results.

In **Table 5** and **6,** the complex viscosity changes are measured. The compositions were compounded on a single screw extruder SSE (Axon BX-25) at 220 rpm with the temperature settings of 170, 220, 220, 220, 220, 220°C before strand pellettization. The samples were then compression moulded in in a hydraulic press machine.
Press temperature 155 °C
Time: 2 min pre-heating, 2 min full press, 5 min cooling to prepare a cylindrical sample (25 mm diameter and 1 mm thickness).

The complex viscosity was measured at 190°C. The configuration was a 25mm plate/plate geometry with 1% strain. Frequency sweep was from 100 to 0.1 rad/sec.

**Table 5**

| | **Comp. example 1** | **Inventive example 1** | **Inventive example 2** |
|---|---|---|---|
| Recycled polyethylene polymer 1 [wt.%] | 100 | 97.5 | 95 |
| EVS [wt.%] | | 2.5 | 5 |
| Complex viscosity [Pa.s] 0.1 rad/s | 2705 | 3954 | 4423 |
| Complex viscosity [Pa.s] 1 rad/s | 783 | 1408 | 1442 |
| Complex viscosity [Pa.s] 100 rad/sec | 153 | 212 | 199 |

**Table 6**

| | **Comp. example 3** | **Inventive example 4** | **Inventive example 5** |
|---|---|---|---|
| Recycled polyethylene 2 [wt.%] | 100 | 97.5 | 95 |
| EVS [wt.%] | | 2.5 | 5 |
| Complex viscosity [Pa.s] 0.1 rad/s | 2727 | 3076 | 4281 |
| Complex viscosity [Pa.s] 1 rad/s | 1567 | 1754 | 2173 |
| Complex viscosity [Pa.s] 100 rad/sec | 269 | 300 | 331 |

As can be seen from **Table 5** and **6,** the addition of EVS to the recycled polyethylene increases the complex viscosity of the composition. This is a proof of molecular enlargement and shear thinning of the composition (P) comprising recycled polyethylene.

In **Table 7,** the effect of EVS on the elongation viscosity is reported for Recycled polyethylene 2. The effect of strain hardening (higher melt elasticity and viscosity) for the inventive example can be observed.

**Table 7**

| | **Comp. example 3** | **Inventive example 4** | **Inventive example 5** |
|---|---|---|---|
| Recycled polyethylene 2 [wt.%] | 100 | 97.5 | 95 |
| EVS [wt.%] | | 2.5 | 5 |
| Elongation viscosity [Pa.s] after 0.01 s | 2724 | 3015 | 3135 |
| Elongation viscosity [Pa.s] after 2.0 s | 119492 | 134515 | 211241 |
| Maximum elongation viscosity [Pa.s] | 125522 | 177091 | 437487 |
| Step time at maximum elongation viscosity (s) | 2.6 | 3.1 | 3.8 |

The examples show the improved melt elasticity properties of the invention.

Additional examples of mixing virgin LDPE with different MFR2 with EVS are shown in **Table 8.** The compositions were made according to the procedure used for the examples of **Table 1.**

**Table 8**

| | **Comp. example 8** | **Comp. example 9** | **Comp. example 10** | **Comp. example 11** | **Comp. example 12** |
|---|---|---|---|---|---|
| LDPE-22 [wt.%] | 100 | 97.5 | | | |
| LDPE-7 | | | 100 | 97.5 | 95 |
| EVS [wt.%] | | 2.5 | | 2.5 | 5 |
| MFR₂ [g/10 min] | 21.1 | 19.1 | 7.2 | 6.7 | 6.5 |
| Relative difference [+/- %] | 0% | -9% | 0% | -7% | -10% |

As can be seen in **Table 8,** when adding EVS to virgin LDPE the MFR₂ is decreased. The percentage decrease is in the same range as the one seen in **Table 3** when adding LDPE-1. It can thus be concluded that decrease in MFR₂ is due to the low MFR of the EVS (MFR₂ of 1.0 g/10min). The decrease of MFR₂ is significantly lower compared to that observed in the inventive examples.

Additional film examples have been produced on a laboratory scale film blowing machine. The examples in **Table 9** show the improved film forming properties of the invention. The recycled polyethylene compositions from comparative example 4 and inventive examples 6 and 7 were compounded on a single screw Brabender & Collins extruder 19/25D, air cooled, equipped with a barrier screw 2.5:1 with a mixing element. The revolutions per minute (RPM) of the extruder were varied.
Film blowing die head with a cooling ring (diameter 2 cm)
Temperature setting (profile): 190-210-210-210°C

**Table 9**

| | **Comp. example 4** | **Inventive example 6** | **Inventive example 7** |
|---|---|---|---|
| Recycled polyethylene 3 [wt.%] | 100 | 97.5 | 95 |
| EVS [wt.%] | | 2.5 | 5 |
| MFR₂ [g/10 min] | 4.4 | 2.1 | 1.0 |
| Relative difference [+/- %] | 0% | -52% | -77% |
| RPM 40 | No film formed | Film formed, Greatly improved film quality stable | Film formed, Film quality unstable |
| RPM 60 | No film formed | | Film formed, Greatly improved film quality stable |

The inventive examples show that stable film production can be achieved by the invention. The MFR is lowered and the blowability is improved.

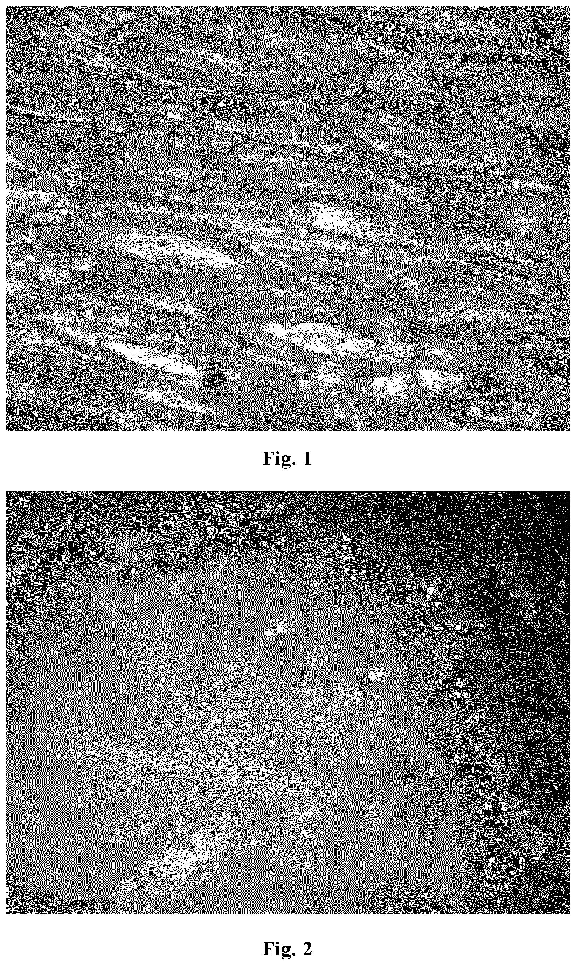

A microscope photo of a film blown from the recycled material without EVS (comparative example 4) shows (cf. **Fig. 1****)** an inhomogeneous material with separate phases. The dispersed phases are elongated in the machine direction due orientation effects at the exit of the die. During film blowing, the continuous phase will take the stresses and as the phase is only a part of the total volume the stress in this phase becomes too high, easily leading to breakage. With the addition of 5% EVS the microscope photo shows a homogenous material (cf. **Fig. 2****).** The EVS works as a compatibilizer that evens out the phase boundaries. Meaning that the phases interact mechanically, which means that the total volume of the material can take up stresses. Thus, the presence of EVS, a polymer comprising an ethylene backbone and pendant hydrolysable silicon-containing groups, in inventive example 6 and 7 provides improved film blowing properties.

## Claims

1. A process of providing a composition (P) comprising recycled polyethylene, wherein the process comprises the step of compounding a recycled polyethylene (A) with a polymer (B) comprising an ethylene backbone and pendant hydrolysable silicon-containing groups, to provide a composition (P) comprising:
a) at least 50 wt.% of the recycled polyethylene (A), and
b) 0.5 to 15 wt.% the polymer (B) with pendant hydrolysable silicon-containing groups,
wherein the composition (P) comprising the recycled polyethylene (A) has at least 15% lower MFR₂ compared to the recycled polyethylene (A) before being compounded with the polymer (B) with pendant hydrolysable silicon-containing groups, and
wherein the moisture content in the recycled polyethylene (A) to be compounded with polymer (B) is less than 5 wt.%, such as less than 3.0 wt.% or less than 1.0 wt%.

2. The process according to claim 1, wherein the amount of the recycled polyethylene (A) in the composition (P) is at least 75 wt.%, preferably at least 80 wt.%; and/or wherein the amount of the polymer (B) with an ethylene backbone and pendant hydrolysable silicon-containing groups in the composition (P) is from 1.0 to 10 wt.%, such as from 2.0 to 7.0 wt.%, or from 2.0 to 5.0 wt.%.

3. The process according to any one of the preceding claims, wherein the pendant hydrolysable silicon-containing groups are groups comprising hydrolysable silyl groups, such as trimethoxysilyl groups, and/or triethoxysilyl groups, and/or triacetoxy silane, preferably trimethoxysilyl groups and/or triethoxysilyl groups; preferably the polymer (B) comprising an ethylene backbone and pendant hydrolysable silicon-containing groups comprises 0.0001 to 0.015, such as 0.001 to 0.010, pendant hydrolysable silicon-containing groups per repeating ethylene unit.

4. The process according to any one of the preceding claims, wherein the polymer (B) with an ethylene backbone and pendant hydrolysable silicon-containing groups is a co-polymer obtainable by co-polymerisation of ethylene and a vinylsilane, such as vinyltrimethoxysilane and/or vinyltriethoxysilane; preferably the polymer (B) with an ethylene backbone and pendant hydrolysable silicon-containing groups being an LDPE; and/or preferably the content of the vinylsilane co-monomer in the co-polymer being 0.5 to 3 wt%, such as 1 to 2 wt.%.

5. The process according to any one of the preceding claims, wherein the polymer (B) is added to the compounding as a composition, said composition being essentially free from peroxides and peroxide residues.

6. The process according to any one of the claims 1 to 3, wherein the polymer (B) with pendant hydrolysable silicon-containing groups is a polyethylene that is grafted by hydrolysable silicon-containing groups.

7. The process according to any one of the preceding claims, wherein the composition (P) is essentially free from a silane condensation catalyst.

8. The process according to any one of the preceding claims, wherein the recycled polyethylene (A), to be compounded with polymer (B) with pendant hydrolysable silicon-containing groups, is provided as a composition (AA) comprising not only polyethylene but also other polymer(s), and wherein the moisture content in the composition (AA) is less than 5 wt.%, such as less than 3.0 wt.% or less than 1.0 wt%

9. The process according to claim 8, wherein the composition (AA) further comprises ethylene methacrylic acid copolymer (EMAA), ethylene acrylic acid copolymer (EAA), and/or maleic anhydride (MAH) grafted polyolefin, and optionally a low molecular weight organic acid, such as formic acid and/or acetic acid.

10. The process according to claim 8 or 9, wherein the composition (AA) comprises less than 5.0 wt.% polyethylene terephthalate (PET), such as less than 2.0 wt.% or less than 1.0 wt.% PET; and/or
wherein the composition (AA) comprises less than 5.0 wt.% ethylene methacrylic acid copolymer (EMAA), such as less than 2.5 wt% EMAA; and/or less than 5.0 wt.% ethylene acrylic acid copolymer (EAA), such as less than 2.5 wt% EAA; and/or less than 5.0 wt.% maleic anhydride (MAH) grafted polyolefin, such as less than 2.5 wt% MAH grafted polyolefin.

11. The process according to any one of the preceding claims, wherein the recycled polyethylene (A) is obtained from a liquid packaging board comprising polyethylene.

12. A composition (P) comprising recycled polyethylene (A), wherein the composition (P) comprises:
a) at least 50 wt.% of recycled polyethylene (A), and
b) 0.5 to 15 wt.% of a polymer (B) comprising an ethylene backbone and pendant hydrolysable silicon-containing groups,
wherein said composition (P) is obtainable by compounding the recycled polyethylene (A) with the polymer (B) with pendant hydrolysable silicon-containing groups, said composition (P) after the compounding having a MFR₂ of 0.4 to 4 g/10 min, and wherein the composition (P) comprising the recycled polyethylene comprises less than 5.0 wt.% polyethylene terephthalate (PET), and/or less than 5.0 wt.% ethylene methacrylic acid copolymer (EMAA), and/or less than 5.0 wt.% ethylene acrylic acid copolymer (EAA), and/or less than 5.0 wt.% maleic anhydride (MAH) grafted polyolefin.

13. An article, such as a film, a container, a bottle, a pipe, a profile, or a tray, comprising recycled polyethylene, wherein the article is provided by forming the recycled polyethylene composition (P) according to claim 12 into an article.

14. Use of a polymer (B) comprising an ethylene backbone and pendant hydrolysable silicon-containing groups as an MFR₂ modifier for recycled polyethylene (A), wherein the use comprises compounding the recycled polyethylene (A) with the polymer (B) comprising an ethylene backbone and pendant hydrolysable silicon-containing groups to provide a composition (P) comprising recycled polyethylene (A), and wherein the moisture content in the recycled polyethylene (A) to be compounded with polymer (B) is less than 5 wt.%, such as less than 3.0 wt.% or less than 1.0 wt%.

15. Use of a polymer (B) comprising an ethylene backbone and pendant hydrolysable silicon-containing groups as a compatibilizer modifier for recycled polyethylene (A), wherein the use comprises compounding the recycled polyethylene (A) with the polymer (B) comprising an ethylene backbone and pendant hydrolysable silicon-containing groups to provide a composition (P) comprising recycled polyethylene (A), and wherein the moisture content in the recycled polyethylene (A) to be compounded with polymer (B) is less than 5 wt.%, such as less than 3.0 wt.% or less than 1.0 wt%; optionally the recycled polyethylene (A) being provided as a composition (AA) comprising not only polyethylene but also other polymer(s).
